# EUROPÄISCHE PATENTSCHRIFT

(11) **EP 3 527 505 B1**
(45) Veröffentlichungstag und Bekanntmachung des Hinweises auf die Patenterteilung: **28.02.2024**
(21) Anmeldenummer: 18405014.4
(22) Anmeldetag: 30.06.2018
(51) Int. Cl.: B65F 1/06, B65F 1/14, B65F 1/00

(54) **BEHÄLTER FÜR DIE GETRENNTE ENTSORGUNG VON PAPIER UND ABFALL**
CONTAINER FOR THE SEPARATE DISPOSAL OF PAPER AND WASTE
RÉCIPIENT POUR L'ÉLIMINATION SÉPARÉE DU PAPIER ET DES DÉCHETS

(30) Priorität: 19.02.2018 CH 2192018
(43) Veröffentlichungstag der Anmeldung: 21.08.2019
(73) Patentinhaber: Marzi Marchesi, Fausto Silvio Alexander, 8044 Zürich (CH)
(72) Erfinder: Marzi Marchesi, Fausto Silvio Alexander, 8044 Zürich (CH)
(74) Vertreter: Schmauder & Partner AG Patent- & Markenanwälte VSP

(56) Entgegenhaltungen:
- WO-A2-2008/005987
- DE-U1- 8 506 993
- DE-U1- 9 414 160
- FR-A1- 2 582 924
- FR-A1- 2 870 526
- NL-A- 9 101 362
- US-A- 5 458 350
- US-A1- 2006 138 133

## Beschreibung

### Technisches Gebiet

Die Erfindung betrifft die Altpapier- und Abfallentsorgung in Haushalten und an Arbeitsplätzen.

### Darlegung der Erfindung

### Stand der Technik

Entsorgungsbehälter, zum Beispiel Papierkörbe und Abfalleimer, sind so konzipiert, dass darin gerne jegliche Art von Abfall zusammen mit Altpapier entsorgt wird.

### Nachteile

Wenn Altpapier zusammen mit Abfall entsorgt wird, geht dem Recycling von Altpapier die primäre Ressource abhanden. *"Obwohl für viele Abfallarten ein gut ausgebautes Recyclingangebot besteht, gelangen heute immer noch zu viele rezyklierbare Stoffe in den Abfall. Um die Umweltbelastung weiter zu senken, muss deshalb vermehrt am Anfang der Produktionskette und bei den Konsummustern angesetzt werden." (https:*//*www.bafu.admin.ch*/*bafu*/*de*/*home*/*themen*/*abfall*/*inkuerze.html).* Abfallsäcke welche in Abfalleimer fallen, können einen Mehraufwand an Zeit, Materialien und anderen Ressourcen verursachen.

Ein gattungsgemässer Entsorgungsbehälter ist in NL 9101362 A beschrieben.

Weitere Entsorgungsbehälter sind in WO 2008/005987 A2, DE 8506993 U1, FR 2870526 A1, FR 2582924 A1 und US 2006/138133 A1 beschrieben.

Die US 5458350 A beschreibt einen Entsorgungsbehälter in Form eines Rollwagens, welcher zwei mit Deckeln versehene zylindrische Behälter für Abfall und einen mit einer oberen Abdeckung versehenen Behälter für Altpapier umfasst.

Die US 4834262 A zeigt einen kastenförmigen Behälter für die getrennte Abfallentsorgung, welcher mit einem oberen Kreuzrahmen zur Befestigung von Abfallsäcken ausgestattet ist.

Die DE 9414160 U1 beschreibt einen von oben bestückbaren rechteckigen Sammelrahmen auf Bodenplatte zum Sammeln von Altpapier, wobei die Seitenteile des Sammlers durchgehende Zwischenräume von oben bis zur Bodenplatte aufweisen.

### Aufgabe

Die Erfindung soll helfen, dass Altpapier nicht zusammen mit Abfall entsorgt wird. Die Erfindung soll eine sichere Befestigung von Abfallsäcken im Behälter ermöglichen.

Die Erfindung soll eine praktische Handhabung des Entsorgungsbehälters ermöglichen.

### Lösung

Die Aufgabe wird durch den Entsorgungsbehälter nach dem unabhängigen Anspruch 1 gelöst.

### Kurze Darstellung der Erfindung

Der Entsorgungsbehälter bildet eine Einheit aus zwei separaten Behältern. Ein erster Behälter ist für die Entsorgung von Altpapier, der andere, zweite Behälter ist für die Entsorgung von Abfall konzipiert worden. Ein Griffspalt erleichtert das Entfernen von Altpapier aus dem ersten Behälter. An dem für die Entsorgung von Abfall vorgesehenen zweiten Behälter, ist ein abnehmbarer Rahmen angebracht, welcher den Halt der Abfallsäcke im Behälter sichert. Der Entsorounosbehälter weist seitliche Griffe auf, welche die Handhabung vereinfachen.

### Aufzählung der Zeichnungen

Die Erfindung wird anhand von Zeichnung näher erläutert, auf diesen ist ersichtlich:
- Fig.1:: Der Entsorgungsbehälter

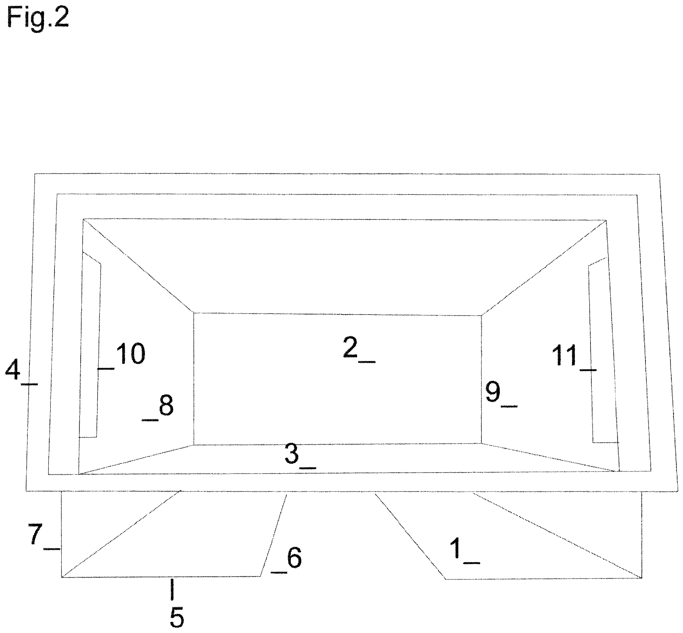

- Fig.2:: Der Entsorgungsbehälter von oben

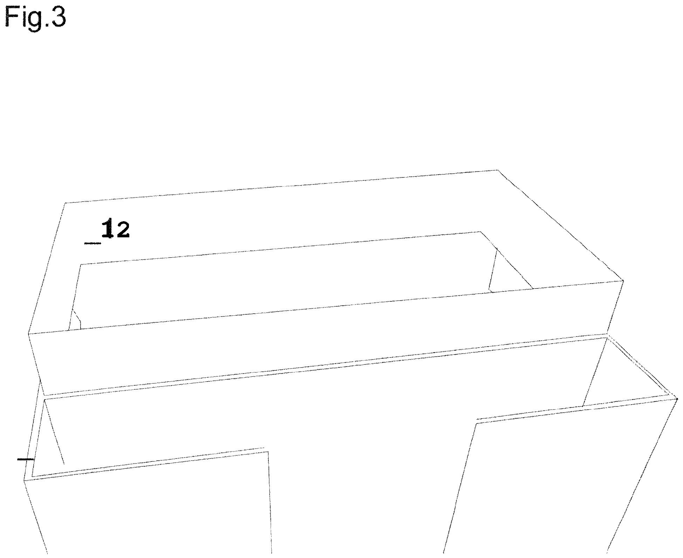

- Fig.3:: Detailansicht von Fig.1, Halterung

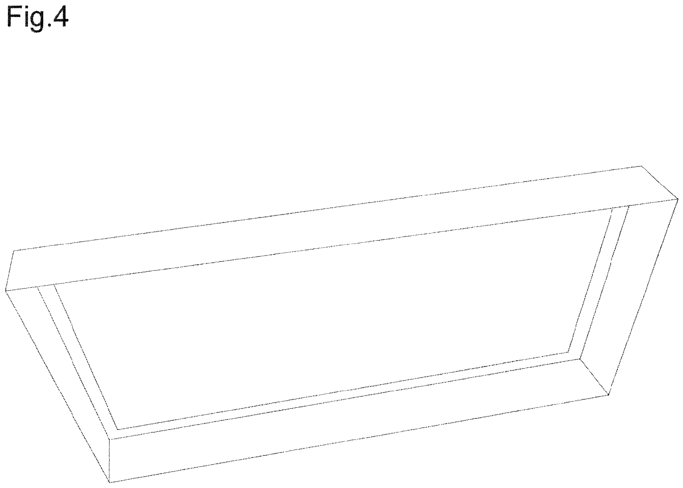

- Fig.4:: Detailansicht von Fig.1, Rahmen

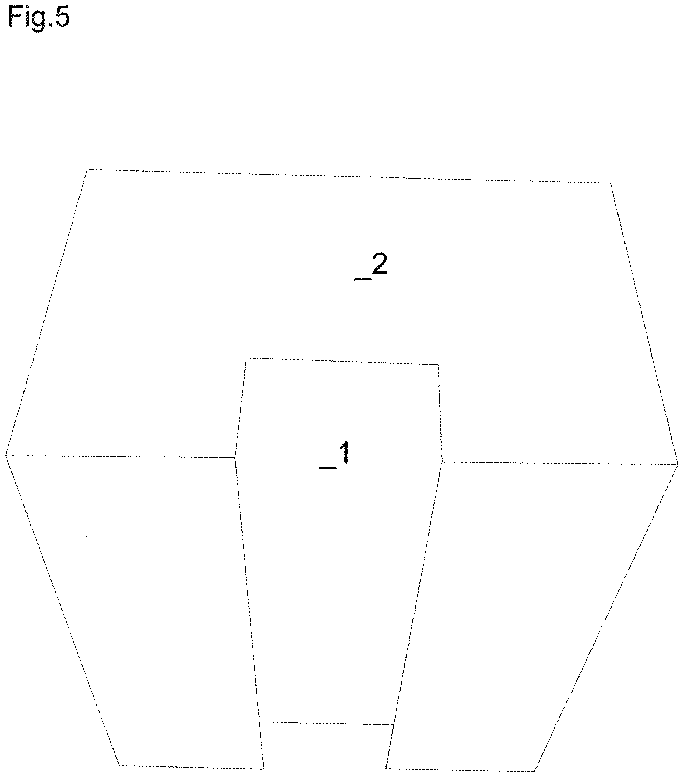

- Fig.5:: Der Entsorgungsbehälter von unten

### Detaillierte Beschreibung der Erfindung

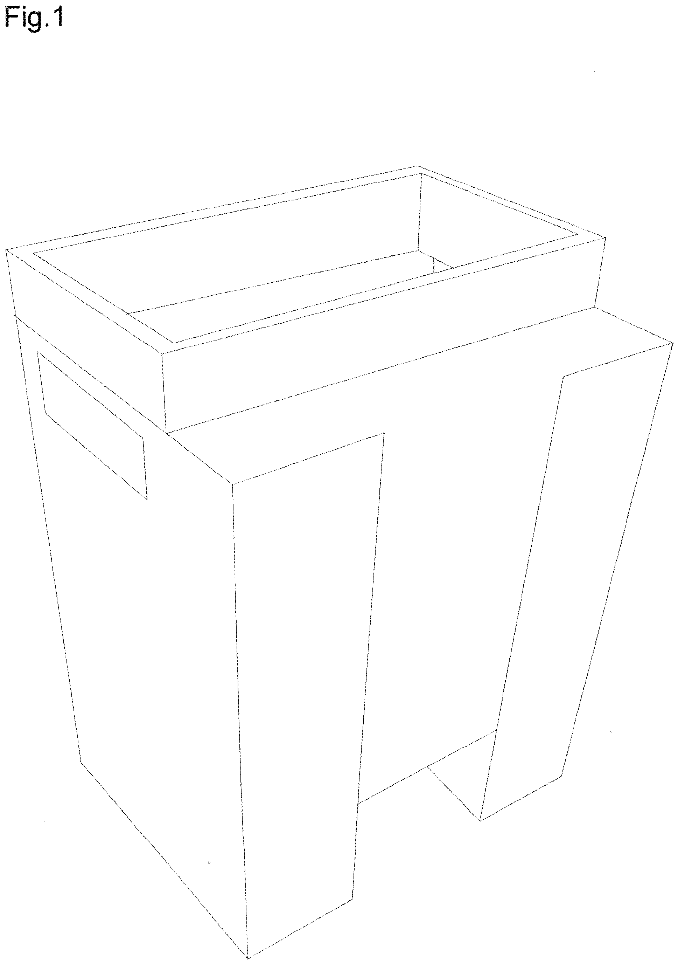

Fig.1 zeigt den Entsorgungsbehälter für die getrennte Entsorgung von Altpapier und Abfall in Haushalten und an Arbeitsplätzen. Der Entsorgungsbehälter besteht aus zwei rechteckigen, nach oben offenen Behältern 1, 2 welche eine Trennwand 3 aufweisen sowie aus einem abnehmbaren Rahmen 4.

Der erste Behälter 1 ist für das Altpapier bestimmt. Um das Leeren zu erleichtern, ist er in der Mitte der zur Trennwand parallel verlaufenden Aussenwand 5 mit einem durchgehenden, gleich breiten, vertikalen Griffspalt 6 und einer, der Breite des Spalts und der Tiefe des Behälters entsprechenden Öffnung 7 im Behältnisboden 2 versehen.

Der zweite Behälter 2 ist für die Entsorgung des Abfalls bestimmt. Um das Handhaben des Behälters zu erleichtern, befindet sich auf den zwei gegenüberliegenden, rechtwinklig zur Trennwand 3 verlaufenden Wänden 8,9 je eine rechteckige, an diesen horizontal, mittig ausgerichtete und vertikal unter der Innenwand 12 anliegende Öffnung 11, 12 welche als Griff dient. Die Innenwand 12 ragt über den zweiten Behälter 2 hinaus und dient als Halterung für den Rahmen 4 Rahmen und Halterung sichern die Abfallsäcke im zweiten Behälter 2.

## Patentansprüche

1. Entsorgungsbehälter welcher auf Grund von zwei nach oben offenen Behältern (1,2), die getrennte Entsorgung von Altpapier und Abfall ermöglicht, wobei um Abfallsäcke sicher in den für die Entsorgung von Abfall vorgesehenen zweiten Behälter (2) befestigen zu können, dieser einen abnehmbaren Rahmen (4) und eine dafür vorgesehene Halterung aufweist, **dadurch gekennzeichnet, dass** an zwei Seiten des Entsorgungsbehälters je ein Griff (10, 11) angebracht ist, welcher die Handhabung des Entsorgungsbehälters erleichtert, wobei, um den für die Entsorgung von Altpapier konzipierten ersten Behälter (1) leeren zu können, dieser 10 einen durchgehenden, gleich breiten, vertikalen Griffspalt (6) aufweist, und wobei der erste Behälter (1) mit einer der Breite des Griffspaltes (6) und der Tiefe des ersten Behälters (1) entsprechenden Öffnung (7) Boden des ersten Behälters versehen ist.

2. Entsorgungsbehälter nach Patentanspruch 1, **dadurch gekennzeichnet, dass** der Entsorgungsbehälter sowie der erste Behälter (1) und der zweite Behälter (2) je rechteckig ausgebildet sind.

## Claims

1. Disposal container which, by virtue of two containers (1, 2) open at their top, enables separate disposal of waste paper and waste, wherein, in order to be able to securely fasten waste bags in the second container (2) intended for the disposal of waste, said second container (2) is provided with a removable frame (4) and a holder provided therefor, **characterized in that** a handle (10, 11) is disposed at each of two sides of the disposal container, which facilitates the handling of the disposal container, wherein, in order to be able to empty the first container (1) designed for the disposal of waste paper, the first container (1) is provided with a continuous, equally wide, vertical handling gap (6) and wherein the first container (1) is provided with with an opening (7) in the bottom of the first container, which opening corresponds to the width of the handling gap (6) and the depth of the first container (1).

2. The disposal container according to claim 1, **characterized in that** the disposal container and the first container (1) and the second container (2) are each configured rectangularly.

## Revendications

1. Récipient d'élimination qui, grâce à deux récipients (1, 2) ouverts vers le haut, permet l'élimination séparée des vieux papiers et des déchets, dans le quel pour pouvoir fixer solidement les sacs-poubelle dans le deuxième récipient (2) destiné à l'élimination des déchets, le deuxième récipient (2) est pourvu d'un cadre amovible (4) et un support prévu à cet effet, **caractérisé en ce qu'**il comporte une poignée (10, 11) est disposée sur chacun des deux côtés du récipient d'élimination ainsi facilitant la manipulation du récipient d'élimination, et que, pour vider le premier récipient (1) conçu pour l'élimination des vieux papiers, le premier récipient (1) est pourvu d'une fente de préhension (6) verticale continue de même largeur, et que le premier récipient (1) est pourvu d'une ouverture (7) dans le fond du premier récipient correspondante à la largeur de la fente de préhension (6) et à la profondeur du premier récipient (1).

2. Récipient d'élimination selon la revendication 1, **caractérisé en ce que** le récipient d'élimination ainsi que le premier récipient (1) et le deuxième récipient (2) sont chacun rectangulaires.
